# EUROPÄISCHE PATENTANMELDUNG

(11) **EP 4 524 324 A1**
(43) Veröffentlichungstag der Anmeldung: **19.03.2025**
(21) Anmeldenummer: 23196808.2
(22) Anmeldetag: 12.09.2023
(51) Int. Cl.: E01C 23/01, E01C 23/06

(54) **VERFAHREN UND SYSTEM ZUR VORBEREITUNG EINER STRASSE ZUR SANIERUNG**

(71) Anmelder: STRABAG AG, 9800 Spittal an der Drau (AT)
(72) Erfinder: ZURL, Jacob, 8042 Graz (AT)
(74) Vertreter: SONN Patentanwälte GmbH & Co KG

(57) **Zusammenfassung**

Verfahren zur Vorbereitung einer Straße (1) zur Sanierung mit den folgenden Schritten:
- Vermessen einer Oberfläche (4) der Straße (1) mittels eines optischen Messverfahrens, insbesondere mittels eines Laser-Scanners (8);
- Ermitteln einer Asphaltdecken-Schichtdicke (5) mittels eines Geo-Radars (9);
- Erstellen eines 3D-Modells der Straße (1) aufweisend die zuvor vermessene Oberfläche (4) und die ermittelte Asphaltdecken-Schichtdicke (5);
- Vergleichen der Asphaltdecken-Schichtdicke (5) im 3D-Modell mit einem vordefinierten Maximalwert, um überschüssige Asphaltdecken-Anteile (10) der Asphaltdecke (2) im 3D-Modell zu bestimmen;
- Abfräsen der überschüssigen Asphaltdecken-Anteile (10);
- Abtransportieren der abgefrästen Asphaltdecken-Anteile (10a); und
- Durchfräsen einer verbleibenden Asphaltdecke (20).

## Beschreibung

Die Erfindung betrifft ein Verfahren zur Vorbereitung einer Straße zur Sanierung, eine Vorrichtung zum Erstellen eines 3D-Modells einer Straße, sowie ein System zur Vorbereitung einer Straße zur Sanierung.

Insbesondere in Europa bestehen hohe Anforderungen an Straßen, wie beispielsweise Schnellstraßen, Autobahnen, aber selbst auch an kleinere Nebenstraßen, bezüglich deren Aufbau und Beschaffenheit. Der Aufbau von Straßen kann beispielsweise in Untergrund, Unterbau und Oberbau gegliedert werden. Der Untergrund wird durch den Boden gebildet und kann gegebenenfalls beispielsweise mittels Geogittern, Geozellen oder Vliesen verfestigt vorliegen. Auf den Untergrund folgt typischerweise der Unterbau, der künstlich erstellt wird. Der Unterbau kann dazu dienen, Unebenheiten des Untergrunds auszugleichen und die Tragfähigkeit des Untergrunds zu verbessern. Der Unterbau schließt mit dem sogenannten Planum ab. Auf den Unterbau bzw. auf das Planum des Unterbaus folgt der Oberbau der Straße. Der Oberbau kann mehrere Tragschichten aufweisen, wobei zwischen gebundenen und ungebundenen Tragschichten unterschieden werden kann. Gebundene Tragschichten werden durch Mischen eines Grundstoffes (beispielsweise Gesteinskörnung) mit Bindemittel und durch anschließendes Verdichten stabilisiert. Insbesondere die Tragschichten der Straße müssen wechselnden klimatischen Bedingungen (Hitze, Frost, Schnee, Regen, etc.), sowie starker mechanischer Belastung durch den Straßenverkehr standhalten. Als Bindemittel kommen beispielsweise Zement, Tragschichtbinder oder Bitumenemulsion mit Zement in Frage. Oftmals bildet eine Asphaltdecke den oberen Abschluss der Straße, auf der letztlich der Verkehr fährt.

Durch die starke Beanspruchung von Straßen und die hohen Anforderungen an Straßen in Bezug auf die Verkehrssicherheit, ist es notwendig, Straßen in regelmäßigen Abständen und/oder anlassbezogen zu sanieren. Die Sanierung der Straße betrifft dabei in den meisten Fällen lediglich den Oberbau der Straße, d.h. eine oder mehrere Tragschichten. Dazu werden typischerweise die betroffenen Tragschichten abgefräst und entweder ganz oder teilweise mit neuem Material ausgetauscht. Ein Anteil des abgefrästen Materials kann wiederverwendet werden. Beispielsweise kann ein Anteil der durchgefrästen Tragschicht mit Kalk oder Zement vermischt werden und wiederum als Tragschicht für die sanierte Straße dienen. Über die wiederaufbereitete Tragschicht kann beispielsweise eine (weitere) gebundene Tragschicht aufgebracht werden. Optional kann beispielsweise eine Asphaltdecke als Deckschicht aufgebracht werden. Bauanforderungen an Straßen in Österreich in Bezug auf Herstellungsverfahren, Maschinen, Baustoffe, Schichtdicken und Prüfverfahren sind beispielsweise in den "Richtlinien und Vorschriften für das Straßenwesen" (RVS), insbesondere in der RVS 08.17.01 (Titel: "Mit Bindemittel stabilisierte Tragschichten") sowie in der RVS 03.08.63 (Titel: "Oberbaubemessung") und der RVS 08.16.01 (Titel: "Anforderungen an Asphaltschichten"), festgehalten.

Entsprechende Sanierungsmaßnahmen sind mitunter kostenintensiv, langwierig und führen auch zu einem signifikanten CO₂ Ausstoß. Während der Sanierung kommt es darüber hinaus typischerweise zu vermehrter Belastung umliegender (Ausweich-)Straßen, zu Staus und damit verbundenen Wartezeiten und Umwegen des Verkehrs, die weiter zur Gesamtbilanz der Sanierung beitragen. Es ist daher notwendig, Sanierungen möglichst rasch und unter Einsatz möglichst weniger Ressourcen (wie z.B. Arbeitsstunden, Maschinenstunden und Material) durchzuführen, ohne dabei die Qualität der sanierten Straße und folglich die Verkehrssicherheit zu beeinträchtigen. Entscheidend für die effiziente Sanierung einer Straße ist unter anderem eine sachgerechte und akkurate Planung der Sanierung.

Beispielsweise ist aus der AT 17 051 U1 ein Verfahren zur Bestimmung von Erhaltungsmaßnahmen für eine Straße bekannt. In mehreren Abschnitten der Straße wird eine Schichtdicke der ungebundenen Tragschicht und der gebundenen Tragschicht gemessen, sowie eine Oberflächenstruktur der Straße optisch erfasst. Den Abschnitten werden jeweils ein Tragfähigkeitswert und ein Oberflächenstrukturwert zugeordnet. Aus diesen Werten wird eine Erhaltungskategorie (Instandhaltung, Instandsetzung, Verstärkung und Neubau) ermittelt. Zur Messung der Schichtdicke wird ein Georadar verwendet.

Die CN 107 761 529 B zeigt eine Vorrichtung zum Erkennen und Ausbessern von Fahrbahnschäden. Dazu sind eine Kamera und ein Geo-Radar vorgesehen, die mit einem Prozessor verbunden sind. Der Prozessor erstellt aus den Kamerabildern und den Daten des Geo-Radars ein 3D-Modell der Straße. Das 3D-Modell zeigt Schäden (wie beispielsweise Risse) an der Straße, die folglich ausgebessert werden.

Die CN 107 544 095 B zeigt eine Integration von Georadar-Messdaten in eine 3D-Punktwolke der Straßenoberfläche, welche von einem Laserscanner aufgenommen wurde. Die Georadar-Messungen werden mit GPS-Daten synchronisiert. Anschließend werden die Georadar/GPS- Daten und die Laserscanner-Daten in einem gemeinsamen Koordinatensystem gekoppelt.

Weiters ist aus dem Stand der Technik allgemein bekannt, dass entlang einer zu sanierenden Straße Bohrkerne entnommen werden können, um die Beschaffenheit der Straße und des Untergrunds zu beurteilen. Aus den durch die Bohrkerne ermittelten Daten können Erhaltungsmaßnahmen abgeleitet werden. Die Entnahme von Bohrkernen ist allerdings nicht zerstörungsfrei und mit einem verhältnismäßig hohen Aufwand sowohl in Bezug auf die Entnahme als auch in Bezug auf die Auswertung verbunden.

Um beispielsweise den Materialverbrauch zu verbessern, wird typischerweise zumindest ein Teil der Asphaltdecke der zu sanierenden Straße durchfräst und wiederaufbereitet, um als Tragschicht für die sanierte Straße dienen zu können. Dazu kann eine maximale Dicke der Asphaltdecke vorgesehen sein, die entsprechend wiederaufbereitet werden darf.

Beispielsweise zeigt die US 2001 268 503 A1 ein Verfahren zur kontinuierlichen Anpassung einer Höhe einer Fräse. Die Fräse weist dazu ein Geo-Radar, einen Laser-Sensor und einen GPS-Sensor auf. Die Höhe der Fräse kann derart angepasst werden, dass ein konstanter Abstand zu einer unterirdischen Grenzfläche erreicht wird.

Die DE 10 2014 015 661 A1 zeigt eine Fräsmaschinensteuerung gemäß einer Bodencharakteristik. Es ist eine Fräsmaschine mit einem Bodencharakteristik-Sensor zur Bestimmung einer Bodencharakteristik vorgesehen. Die Fräsmaschine wird entsprechend der gemessenen Bodencharakteristik gesteuert.

Nachteilig am bekannten Stand der Technik ist, dass insbesondere die Sanierung von Straßen nach wie vor mit einem verhältnismäßig hohen Aufwand an Arbeitsstunden, Maschinenstunden und Material einhergeht. Insbesondere wird teilweise eine deutlich größere Menge an Material als notwendig abgetragen und entsprechend ersetzt und/oder eine unverhältnismäßig hohe Anzahl an Maschinenstunden, beispielsweise einer Fräse, eingesetzt.

Es ist daher Aufgabe der Erfindung, die Nachteile des Stands der Technik zumindest zu lindern oder gänzlich zu beseitigen. Insbesondere ist es Aufgabe der Erfindung, ein Verfahren zur Vorbereitung einer Straße zur Sanierung, eine Vorrichtung zum Erstellen eines 3D-Modells einer Straße, sowie ein System zur Vorbereitung einer Straße zur Sanierung bereitzustellen, das den Aufwand an Arbeitsstunden, Maschinenstunden und Material im Vergleich zu derzeit bekannten Verfahren und Vorrichtungen reduziert.

Gelöst wird die Aufgabe durch ein Verfahren zur Vorbereitung einer Straße zur Sanierung mit den folgenden Schritten:
- Vermessen einer Oberfläche der Straße mittels eines optischen Messverfahrens, insbesondere mittels eines Laser-Scanners;
- Ermitteln einer Asphaltdecken-Schichtdicke mittels eines Geo-Radars;
- Erstellen eines 3D-Modells der Straße aufweisend die zuvor vermessene Oberfläche und die ermittelte Asphaltdecken-Schichtdicke;
- Vergleichen der Asphaltdecken-Schichtdicke im 3D-Modell mit einem vordefinierten Maximalwert, um überschüssige Asphaltdecken-Anteile der Asphaltdecke im 3D-Modell zu bestimmen;
- Abfräsen der überschüssigen Asphaltdecken-Anteile;
- Abtransportieren der abgefrästen Asphaltdecken-Anteile; und
- Durchfräsen einer verbleibenden Asphaltdecke.

Ebenfalls wird die Aufgabe gelöst durch eine Vorrichtung zum Erstellen eines 3D-Modells einer Straße aufweisend:
- ein Messfahrzeug aufweisend
   - eine optischen Messeinrichtung, insbesondere einen Laser-Scanners, zum Vermessen einer Oberfläche der Straße; und
   - ein Geo-Radars zur Ermittlung einer Asphaltdecken-Schichtdicke der Straße;
- eine Datenverarbeitungsvorrichtung, die dazu eingerichtet ist, ein 3D-Modell der Straße aufweisend die zuvor vermessene Oberfläche und die ermittelte Asphaltdecken-Schichtdicke zu erstellen, wobei die Datenverarbeitungseinrichtung weiters dazu eingerichtet ist, die Asphaltdecken-Schichtdicke im 3D-Modell mit einem vordefinierten Maximalwert zu vergleichen, um überschüssige Asphaltdecken-Anteile der Asphaltdecke im 3D-Modell zu bestimmen.

Ferner wird die Aufgabe gelöst durch ein System zur Vorbereitung einer Straße zur Sanierung aufweisend die erfindungsgemäße Vorrichtung zum Erstellen eines 3D-Modells der Straße, mit einer Asphaltfräse, wobei die Datenverarbeitungseinrichtung dazu eingerichtet ist zumindest einen ersten Bereichs und zumindest einen zweiten Bereichs der Straße im 3D-Modell zu bestimmen, wobei der zumindest eine erste Bereich im 3D-Modell keine überschüssigen Asphaltdecken-Anteile aufweist, wobei der zumindest eine zweite Bereich überschüssige Asphaltdecken-Anteile aufweist, wobei die Datenverarbeitungseinrichtung weiters dazu eingerichtet ist, auf Basis des zumindest einen zweiten Bereichs einen Abfräsplan zum Abfräsen der überschüssigen Asphaltdecken-Anteile zu erstellen, wobei die Asphaltfräse dazu eingerichtet ist, die überschüssigen Asphaltdecken-Anteile entsprechend dem Abfräsplan abzufräsen.

Die (zu sanierende) Straße kann beispielsweise einen Abschnitt einer oder mehrerer Fahrbahnen einer Autobahn oder einer Schnellstraße aufweisen oder aus diesen bestehen. Die Straße kann beispielsweise eine Breite in einem Bereich von 2 Meter bis 50 Meter breit sein und kann beispielsweise mindestens 50 Meter, optional mindestens 1000 Meter, lang sein. Die Straße kann, wie es von herkömmlichen Straßen bekannt ist, Kurven und/oder eine Neigung aufweisen. Die Straße kann beispielsweise einen Untergrund, einen Unterbau und einen Oberbau aufweisen.

Die Straße, insbesondere der Oberbau der Straße, weißt eine Asphaltdecke auf, die eine Deckschicht der Straße bildet. Die Asphaltdecke kann Bitumen und Gesteinskörnungen aufweisen. Über der Asphaltdecke kann optional eine Betondecke vorliegen, die beispielsweise vor der Anwendung des erfindungsgemäßen Verfahrens abgetragen und entfernt wird. Die Asphaltdecke kann optional Beton aufweisen, beispielsweise kann die Asphaltdecke Asphaltbeton aufweisen. Die Asphaltdecke kann Asphalt und optional ein Bindemittel wie Zement aufweisen. Die Straße weist eine laterale Ausdehnung auf. Die Asphaltdecke weist eine Asphaltdecken-Schichtdicke auf. Die Asphaltdecken-Schichtdicke ist eine Schichtdicke der Straße in vertikaler Richtung. Im Falle einer relativ zum Lot geneigten Straße ist die Schichtdicke in entsprechend geneigter Richtung zu verstehen.

Die Asphaltdecken-Schichtdicke kann entlang der Straße variieren, d.h. an unterschiedlichen Stellen der Straße unterschiedliche Werte annehmen. Die Asphaltdecken-Schichtdicke der zu sanierenden Straße kann beispielsweise zwischen 1 Zentimeter und 100 Zentimeter, insbesondere zwischen 2 Zentimeter und 50 Zentimeter, optional zwischen 6 Zentimeter und 30 Zentimeter liegen.

Eine Oberfläche der Straße kann von der Asphaltdecke der Straße gebildet werden. Die Oberfläche der Straße kann beispielsweise eine zweidimensionale Fläche sein. Die Asphaltdecke der (zu sanierenden) Straße kann beispielsweise Schäden, wie Risse oder Löcher, aufweisen, die im Zuge einer Sanierung beseitigt werden sollen. Entsprechende Schäden können beispielsweise an der Oberfläche der Straße erfasst werden. Die Straße kann beispielsweise Spurrinnen aufweisen, die durch den Straßenverkehr verursacht werden.

In einem Schritt des Verfahrens zur Vorbereitung einer Straße zur Sanierung wird die Oberfläche der Straße mittels eines optischen Messverfahrens vermessen. Dazu kann beispielsweise eine optischen Messeinrichtung, wie beispielsweise ein Laser-Scanner, vorgesehen sein und verwendet werden. Die optische Messeinrichtung kann beispielsweise an oder in einem Messfahrzeug angeordnet sein. Das Messfahrzeug kann beispielsweise ein PKW, ein LKW oder ein Baufahrzeug sein. Alternativ kann das Messfahrzeug auch eine Drohne sein. Das Messfahrzeug kann dazu beispielsweise über die Straße fahren, um mittels der optischen Messeinrichtung die Oberfläche der Straße zu vermessen. Das Messfahrzeug kann beispielsweise am Straßenverkehr teilnehmen, sodass die Straße während der Vermessung mit dem Messfahrzeug nicht gesperrt werden muss und der Verkehr dadurch nicht maßgeblich gestört wird. Das Messfahrzeug kann beispielsweise mittels eines Ortungssystems, wie beispielsweise eines globalen Navigationssatellitensystem (GNSS, z.B. GPS), eine Position des Messfahrzeugs während des Vermessens der Oberfläche der Straße aufzeichnen. Somit kann die vermessene Oberfläche, bzw. einzelne vermessene Punkte der Oberfläche, mit Positionsdaten verknüpft werden. Beispielsweise kann somit die Position einzelner Schäden der Straße bestimmt werden. Zum Vermessen der Oberfläche der Straße können beispielsweise Referenzpunkte aufgenommen werden, deren Position exakt vermessen wird. Die vermessene Oberfläche kann beispielsweise Spurrinnen der Straße zeigen. Die optische Messeinrichtung kann beispielsweise eine Totalstation aufweisen, mittels derer die Oberfläche der Straße vermessen werden kann.

Darüber hinaus wird die Asphaltdecken-Schichtdicke der Straße mittels eines Geo-Radars ermittelt. Das Geo-Radar kann dazu (ebenso wie die optische Messeinrichtung) am oder im Messfahrzeug angeordnet sein. Die Asphaltdecken-Schichtdicke kann beispielsweise gleichzeitig mit der Vermessung der Oberfläche ermittelt werden. Somit lassen sich die ermittelten Daten zur Oberfläche und Asphaltdecken-Schichtdicke und optional Positionsdaten besonders einfach miteinander verknüpfen, da die relativen Positionen einzelner Datenpunkte zueinander eine bekannte und verhältnismäßig einfache Relation aufweisen. Ein Geo-Radar (auch unter den Ausdrücken "Bodenradar" oder "Ground Penetrating Radar" (GPR) bekannt) erlaubt eine zerstörungsfreie Messung von Schichtdicken eines Untergrunds (wie der Asphaltdecke der Straße) mittels hochfrequenten elektromagnetischer Wellen. Diese Wellen werden insbesondere an Grenzschichten gestreut und/oder reflektiert. Ein Teil des reflektierten Signals wird wiederum durch das Geo-Radar erfasst. Die (vertikale) Auflösung des Geo-Radars in Bezug auf die Asphaltdecken-Schichtdicke kann beispielsweise zwischen 0,5 Zentimeter und 2 Zentimeter betragen. Das Geo-Radar kann beispielsweise Messpunkte mit einer Frequenz beispielsweise bis zu 1000 Hz (d.h. 1000 Messpunkte pro Sekunde) aufnehmen. Mittels des Geo-Radars kann die Asphaltdecken-Schichtdicke engmaschig ermittelt werden. Die Asphaltdecken-Schichtdicke kann beispielsweise im Wesentlichen kontinuierlich ermittelt werden. Ein lateraler Abstand zwischen benachbarten Messpunkten der Asphaltdecken-Schichtdicke kann beispielsweise maximal 1 m, insbesondere maximal 40 cm, beispielsweise maximal 20 cm, aufweisen Insbesondere im Vergleich zu einer Bestimmung der Asphaltdecken-Schichtdicke der Straße mittels einer Entnahme von Bohrkernen ist mittels eines Geo-Radars eine deutliche engmaschigere Vermessung möglich. Das Geo-Radar kann eine GNSS-Antenne aufweisen, um beispielsweise mittels GPS oder Galileo geortet werden zu können. Die GNSS-Antenne des Geo-Radars kann zusätzlich oder anstelle des Ortungssystems des Messfahrzeugs vorgesehen sein.

In Folge wird ein 3D-Modell der Straße aufweisend die zuvor vermessene Oberfläche und die ermittelte Asphaltdecken-Schichtdicke erstellt. Die vermessene Oberfläche und die ermittelte Asphaltdecken-Schichtdicke werden lagerichtig und höhenrichtig miteinander kombiniert. Dazu können optional Positionsdaten, die beispielsweise mittels GPS erfasst wurden, verwendet werden. Das 3D-Modell der Straße bildet somit zumindest die Oberfläche der Straße und die Asphaltdecke der Straße ab. Aus dem 3D-Modell der Straße kann beispielsweise eine Länge, eine Breite und/oder eine Gesamtfläche der Straße ermittelt werden. Das 3D-Modell kann in einem Baustellen-Koordinatensystem dargestellt sein.

In einem weiteren Schritt wird die Asphaltdecken-Schichtdicke im 3D-Modell mit einem vordefinierten Maximalwert verglichen, um überschüssige Asphaltdecken-Anteile der Asphaltdecke im 3D-Modell zu bestimmen und insbesondere zu lokalisieren. Der vordefinierte Maximalwert kann beispielsweise durch eine Vorschrift oder eine Norm festgelegt sein oder daraus ableitbar sein. Beispielsweise ist aus der RVS 08.17.01 bekannt, dass bei einem Asphaltanteil (Ra) von maximal 50% (in Bezug auf die Tragschicht von Straßen nach deren Sanierung) Probekörper für die Tragschicht nach dem Proctorverfahren herzustellen sind (siehe Abschnitt 8.1.10 "Herstellen von Probekörpern"). Bei einem RA-Anteil von über 50% sind Probekörper mit einer zyklisch statischen Verdichtung herzustellen. In Österreich ist es gängige Praxis, weniger als 50% Asphaltanteil (Ra) in der Tragschicht der sanierten Straße vorzusehen. Damit kann das vergleichsweise kostenintensivere Prüfverfahren auf Basis der zyklisch statischen Verdichtung vermieden werden. Darüber hinaus erfordert RA-Material eine erhöhte Menge an Bindemittel. Bei höheren Mengen als 33 kg/m² Bindemittel sind zudem zur Vermischung des Bindemittels mit dem durchgefrästen Asphalt typischerweise zwei Arbeitsgänge (anstatt nur eines Arbeitsganges) vorgesehen, da eine ausreichende Durchmischung mit nur einem Arbeitsgang nicht gewährleistet werden kann. Daher wird typischerweise ein RA-Anteil von unter 50% verwendet. Eine typische Dicke einer Tragschicht (nach dem Sanieren der Straße) liegt beispielsweise bei 30 cm. Um auch unter Berücksichtigung etwaiger Toleranzen oder Unsicherheiten einen RA-Anteil zu erreichen, der nicht über 50% liegt (aber dennoch knapp an 50% liegt), wird daher typischerweise eine maximale Asphaltdecken-Schichtdicke von 14 Zentimeter (= 30 cm *0.5 - 1cm) der zu sanierenden Straße wiederaufbereitet und als Ausgangsmaterial der Tragschicht für die sanierte Straße verwendet. Insbesondere in Bezug auf die Sanierung von Straßen in Österreich kann der vordefinierte Maximalwert beispielsweise 14 Zentimeter betragen. Beispielsweise auf Flughäfen oder Orten mit sehr hoher Verkehrsbelastung kann eine Tragschicht mit höherer Dicke vorgesehen sein. Beispielsweise kann eine Dicke der Tragschicht 50 cm betragen. Typischerweise wird folglich eine maximale Asphaltdecken-Schichtdicke von 24 Zentimeter (= 50 cm * 0.5 -1 cm) der zu sanierenden Straße wiederaufbereitet. Der vordefinierte Maximalwert kann in diesem Fall beispielsweise 24 Zentimeter betragen.

An Positionen oder in Abschnitten, an denen die Asphaltdecke eine Asphaltdecken-Schichtdicke über dem vordefinierten Grenzwert aufweist, befinden sich überschüssige Asphaltdecken-Anteile. Überschüssige Asphaltdecken-Anteile sind solche, die über dem vordefinierten Maximalwert liegen. Beispielsweise kann der vordefinierte Maximalwert 14 Zentimeter betragen. Beispielsweise kann die Asphaltdecke in einem Abschnitt eine Asphaltdecken-Schichtdicke von 20 Zentimeter aufweisen. In diesem Fall sind die oberen 6 Zentimeter (= 20 Zentimeter minus 14 Zentimeter) des betreffenden Abschnitts der Asphaltdecke die überschüssigen Asphaltdecken-Anteile. Eine Schichtdicke der überschüssigen Asphaltdecken-Anteile ist im Allgemeinen ortsabhängig.

Zum Erstellen des 3D-Modells der Straße aufweisend die zuvor vermessene Oberfläche und die ermittelte Asphaltdecken-Schichtdicke ist eine Datenverarbeitungseinrichtung vorgesehen. Die Datenverarbeitungseinrichtung ist weiters auch dazu eingerichtet, die Asphaltdecken-Schichtdicke im 3D-Modell mit einem vordefinierten Maximalwert zu vergleichen, um die überschüssige Asphaltdecken-Anteile der Asphaltdecke im 3D-Modell zu bestimmen. Die Datenverarbeitungseinrichtung kann beispielsweise ein Computer sein. Die Datenverarbeitungseinrichtung kann beispielsweise ein computerlesbares Speichermedium aufweisen, um den vordefinierten Maximalwert, die Asphaltdecken-Schichtdicke, die vermessene Oberfläche und 3D-Modell zu speichern. Die Datenverarbeitungseinrichtung ist dazu eingerichtet, Daten von der optischen Messeinrichtung und dem Geo-Radar zu empfangen. Beispielsweise kann die Datenverarbeitungseinrichtung mit dem Messfahrzeug verbunden sein, um mit Hilfe des Messfahrzeugs Daten von der optischen Messeinrichtung und dem Geo-Radar zu empfangen. Dazu kann das Messfahrzeug dazu eingerichtet sein, Daten von der optischen Messeinrichtung und vom Geo-Radar zu empfangen und an die Datenverarbeitungseinrichtung weiterzuleiten. Alternativ kann die Datenverarbeitungseinrichtung beispielsweise Teil des Messfahrzeugs sein.

In einem weiteren Schritt werden die zuvor bestimmten überschüssigen Asphaltdecken-Anteile abgefräst. Beispielsweise kann dazu eine Asphalt-Fräse vorgesehen sein.

In einem weiteren Schritt werden die abgefrästen (überschüssigen) Asphaltdecken-Anteile abtransportiert. Nach dem Abtransport des überschüssigen Materials, d.h. der abgefrästen überschüssigen Asphaltdecken-Anteile, wird eine verbleibende Asphaltdecke durchfräst. In diesem Schritt kann auch gleichzeitig eine ungebundene Tragschicht durchfräst werden, falls dies im Zuge der Sanierung notwendig oder wünschenswert sein sollte. Die verbleibende Asphaltdecke kann der Asphaltdecke der zu sanierenden Straße ohne die überschüssigen Asphaltdecken-Anteile entsprechen. Wenn zum Abfräsen der überschüssigen Asphaltdecken-Anteile eine Asphalt-Fräse verwendet wird, kann es beispielsweise aufgrund einer Breite der Asphalt-Fräse notwendig sein, etwas mehr Material abzufräsen als lediglich die überschüssigen Asphaltdecken-Anteile. Die verbleibende Asphaltdecke weist letztlich eine Schichtdicke auf, die den vordefinierten Maximalwert nicht übersteigt.

Durch das erfindungsgemäße Verfahren erfolgt somit eine effiziente Planung und Vorbereitung einer Straße zur Sanierung. Mittels des 3D-Modells, das einerseits optische Messdaten zur Oberfläche und ortsabhängige Informationen zur Asphaltdecken-Schichtdicke aufweist, ist es möglich, den Einsatz an Ressourcen, wie Maschinenstunden (insb. von Asphaltfräsen), Arbeitsstunden und auch Baumaterial zu verringern. Dies wird insbesondere durch den Vergleich der Asphaltdecken-Schichtdicke im 3D-Modell mit dem vordefinierten Maximalwert (d.h. die Bestimmung der überschüssigen Asphaltdecken-Anteile), das Abfräsen der überschüssigen Asphaltdecken-Anteile, den Abtransport der abgefrästen Asphaltdecken-Anteile, und das Durchfräsen der verbleibenden Asphaltdecke, erreicht.

Optional kann vor dem Abfräsen der überschüssigen Asphaltdecken-Anteile der folgende Schritt vorgesehen sein:
- Bestimmen zumindest eines ersten Bereichs und zumindest eines zweiten Bereichs der Straße im 3D-Modell, wobei der zumindest eine erste Bereich im 3D-Modell keine überschüssigen Asphaltdecken-Anteile aufweist, wobei der zumindest eine zweite Bereich überschüssige Asphaltdecken-Anteile aufweist. Die Straße kann in Bereiche mit und Bereiche ohne überschüssige Asphaltdecken-Anteile eingeteilt werden. Die Straße kann zumindest einen ersten Bereich ohne überschüssige Asphaltdecken-Anteile und zumindest einen zweiten Bereich mit überschüssigen Asphaltdecken-Anteile aufweisen. Der zumindest eine zweite Bereich kann zusätzlich zu Abschnitten der Straße mit überschüssigen Asphaltdecken-Anteilen auch Abschnitte der Straße ohne überschüssige Asphaltdecken-Anteilen aufweisen. Im Gegensatz dazu kann der zumindest eine erste Bereich keine überschüssigen Asphaltdecken-Anteilen aufweisen. Durch diese Unterscheidung kann zumindest ein erster Bereich bestimmt werden, der von den Schritten Abfräsen der überschüssigen Asphaltdecken-Anteilen und Abtransportieren der abgefrästen Asphaltdecken-Anteile nicht betroffen ist. Diese Schritte sind somit lediglich im zumindest einen zweiten Bereich notwendig. Das Durchfräsen der verbleibenden Asphaltdecke ist hingegen sowohl im zumindest einen ersten Bereich als auch im zumindest einen zweiten Bereich geplant.

Optional kann vor dem Abfräsen der überschüssigen Asphaltdecken-Anteile der folgende weitere Schritt vorgesehen sein:
- Erstellen eines Abfräsplans zum Abfräsen der überschüssigen Asphaltdecken-Anteile auf Basis des zumindest einen zweiten Bereichs;
wobei das Abfräsen der überschüssigen Asphaltdecken-Anteile entsprechend des erstellten Abfräsplans durchgeführt wird. Der Abfräsplan kann einen zeitlichen Ablauf des Abfräsens festlegen. Beispielsweise kann eine Asphalt-Fräse zum Abfräsen der überschüssigen Asphaltdecken-Anteile entsprechend des Abfräsplans gesteuert werden. Der Abfräsplan kann ferner die Planung des Abtransports der (abgefrästen) überschüssigen Asphaltdecken-Anteile verbessern. Der Abfräsplan kann beispielsweise lediglich den zumindest einen zweiten Bereich berücksichtigen, da der zumindest eine erste Bereich ohnehin keine überschüssigen Asphaltdecken-Anteile aufweist. Der Abfräsplan wird auf Basis des zumindest einen Bereichs erstellt. Durch den Abfräsplan kann insbesondere der Einsatz von Maschinenstunden der Asphalt-Fräse reduziert werden, da die Asphaltfräse den zumindest einen ersten Bereich während des Abfräsens der überschüssigen Asphaltdecken-Anteile nicht notwendiger Weise bearbeiten muss. Asphalt-Fräsen sind typischerweise große, schwere und träge Maschinen, die darüber hinaus einen hohen Energiebedarf aufweisen. Eine Reduktion der Maschinenstunden von Asphalt-Fräsen oder vergleichbaren Geräten kann daher die Gesamtdauer und den Einsatz von Ressourcen für die Sanierung einer Straße deutlich reduzieren.

Das System zur Vorbereitung einer Straße zur Sanierung weist die erfindungsgemäße Vorrichtung zum Erstellen eines 3D-Modells der Straße und eine Asphalt-Fräse auf. Die Datenverarbeitungseinrichtung ist eingerichtet, den zumindest einen ersten Bereich und den zumindest einen zweiten Bereich der Straße im 3D-Modell zu bestimmen. Der zumindest eine erste Bereich im 3D-Modell weist keine überschüssigen Asphaltdecken-Anteile auf, wobei der zumindest eine zweite Bereich überschüssige Asphaltdecken-Anteile aufweist. Die Datenverarbeitungseinrichtung ist weiters dazu eingerichtet, auf Basis des zumindest einen zweiten Bereichs einen Abfräsplan zum Abfräsen der überschüssigen Asphaltdecken-Anteile zu erstellen. Die Asphaltfräse ist dazu eingerichtet, die überschüssigen Asphaltdecken-Anteile entsprechend dem Abfräsplan abzufräsen.

Das System zur Vorbereitung einer Straße zur Sanierung kann beispielsweise Mittel zum Abtransportieren der abgefrästen Asphaltdecken-Anteile aufweisen, wobei die Asphaltfräse weiters dazu eingerichtet ist, eine verbleibende Asphaltdecke durchzufräsen. Die Mittel zum Abtransportieren der abgefrästen Asphaltdecken-Anteile können beispielsweise zumindest einen Bagger und/oder zumindest einen Kipplader aufweisen. Die Asphaltfräse ist dazu eingerichtet (nach dem Abtransport der abgefrästen Asphaltdecken-Anteile) die verbleibende Asphaltdecke durchzufräsen. Dazu kann beispielsweise ein Durchfräsplan aus Basis des 3D-Modells erstellt werden. Der Durchfräsplan kann einen zeitlichen Ablauf des Durchfräsens festlegen. Der Durchfräsplan betrifft den zumindest einen ersten und den zumindest einen zweiten Bereich der Straße. Die Asphalt-Fräse kann entsprechend des Durchfräsplans gesteuert werden. Der Durchfräsplan kann eine Dicke der verbleibenden Asphaltdecke anzeigen, die von der Asphalt-Fräse durchfräst werden soll.

Beispielsweise kann das erfindungsgemäße Verfahren den folgenden weiteren Schritt aufweisen:
- Berechnen eines Volumens der überschüssigen Asphaltdecken-Anteile mittels des 3D-Modells. Die Kenntnis des Volumens der überschüssigen Asphaltdecken-Anteile kann die Planung der Sanierung weiter verbessern und zu einer effizienteren und schnelleren Sanierung der Straße führen. Beispielsweise kann somit der Einsatz von Mitteln zum Abtransport der abgefrästen Asphaltdecken-Anteile besser geplant werden.

Optional kann der folgende weitere Schritt vorgesehen sein:
- Entnehmen zumindest eines Bohrkerns aus der Straße zur Ermittlung zumindest eines Referenzpunktes der Asphaltdecken-Schichtdicke; wobei das 3D-Modell den zumindest einen Referenzpunkt aufweist. Die Entnahme von Bohrkernen stellt einerseits eine sehr genaue Methode zu Bestimmung von Schichtdicken, wie der Asphaltdecken-Schichtdicke, dar, ist andererseits allerdings nicht zerstörungsfrei, bedarf typischerweise einer Sperre zumindest eines Straßenabschnitts und ist auch in der Auswertung mit verhältnismäßig großem Aufwand verbunden. Im Vergleich dazu stellt die Verwendung eines Geo-Radars und eines optischen Messverfahrens eine deutlich einfachere und günstigere Alternative dar. Die Genauigkeit des 3D-Modells kann jedoch verbessert werden, indem zumindest ein Bohrkern entnommen wird, um die Asphaltdecken-Schichtdicke an zumindest einem Referenzpunkt zu referenzieren. Optional können mehrere Bohrkerne entnommen werden, die beispielsweise äquidistant oder regelmäßig entlang der Straße angeordnet sind.

Beispielhaft wird die Erfindung gemäß der nachfolgenden verallgemeinerten Ausführungsformen 1 bis 5 beschrieben:
1. Verfahren zur Vorbereitung einer Straße zur Sanierung mit den folgenden Schritten:
   - Bereitstellen eines 3D-Modells der Straße aufweisend eine vermessene Oberfläche und eine Asphaltdecken-Schichtdicke der Straße;
   - Vergleichen der Asphaltdecken-Schichtdicke im 3D-Modell mit einem vordefinierten Maximalwert, um überschüssige Asphaltdecken-Anteile der Asphaltdecke im 3D-Modell zu bestimmen;
   - Abfräsen der überschüssigen Asphaltdecken-Anteile;
   - Abtransportieren der abgefrästen Asphaltdecken-Anteile; und
   - Durchfräsen einer verbleibenden Asphaltdecke.
2. Verfahren nach Ausführungsform 1, gekennzeichnet durch den weiteren Schritt vor dem Abfräsen der überschüssigen Asphaltdecken-Anteile:
   - Bestimmen zumindest eines ersten Bereichs und zumindest eines zweiten Bereichs der Straße im 3D-Modell, wobei der zumindest eine erste Bereich im 3D-Modell keine überschüssigen Asphaltdecken-Anteile aufweist, wobei der zumindest eine zweite Bereich überschüssige Asphaltdecken-Anteile aufweist.
3. Verfahren nach Ausführungsform 2, gekennzeichnet durch den weiteren Schritt vor dem Abfräsen der überschüssigen Asphaltdecken-Anteile:
   - Erstellen eines Abfräsplans zum Abfräsen der überschüssigen Asphaltdecken-Anteile auf Basis des zumindest einen zweiten Bereichs;
   wobei das Abfräsen der überschüssigen Asphaltdecken-Anteile entsprechend des erstellten Abfräsplans durchgeführt wird.
4. Verfahren nach einer der Ausführungsformen 1 bis 3, gekennzeichnet durch den weiteren Schritt:
   - Berechnen eines Volumens der überschüssigen Asphaltdecken-Anteile mittels des 3D-Modells.
5. Verfahren nach einer der Ausführungsformen 1 bis 4, gekennzeichnet durch den weiteren Schritt:
   - Entnehmen zumindest eines Bohrkerns aus der Straße (1) zur Ermittlung zumindest eines Referenzpunktes der Asphaltdecken-Schichtdicke; wobei das 3D-Modell den zumindest einen Referenzpunkt aufweist.

Im Folgenden wird die Erfindung anhand von Zeichnungen näher beschrieben, auf die sie jedoch nicht beschränkt sein soll.
Fig. 1A zeigt schematisch eine perspektivische Ansicht einer Straße mit einem ersten Bereich und einem zweiten Bereich
Fig 1B-D zeigen jeweils schematisch einen Querschnitt der Straße mit ortsabhängiger Asphaltdecken-Schichtdicke und überschüssigen Asphaltdecken-Anteilen
Fig. 2A zeigt schematisch einen Querschnitt durch die Straße aus Fig. 1 mit einem schematischen Messfahrzeug
Fig. 2B zeigt schematisch einen weiteren Querschnitt der Straße aus Fig. 1
Fig. 3 zeigt schematisch eine Asphaltfräse und einem Kipplader beim Abfräsen bzw. Abtransportieren überschüssiger Asphaltdecken-Anteile der Straße

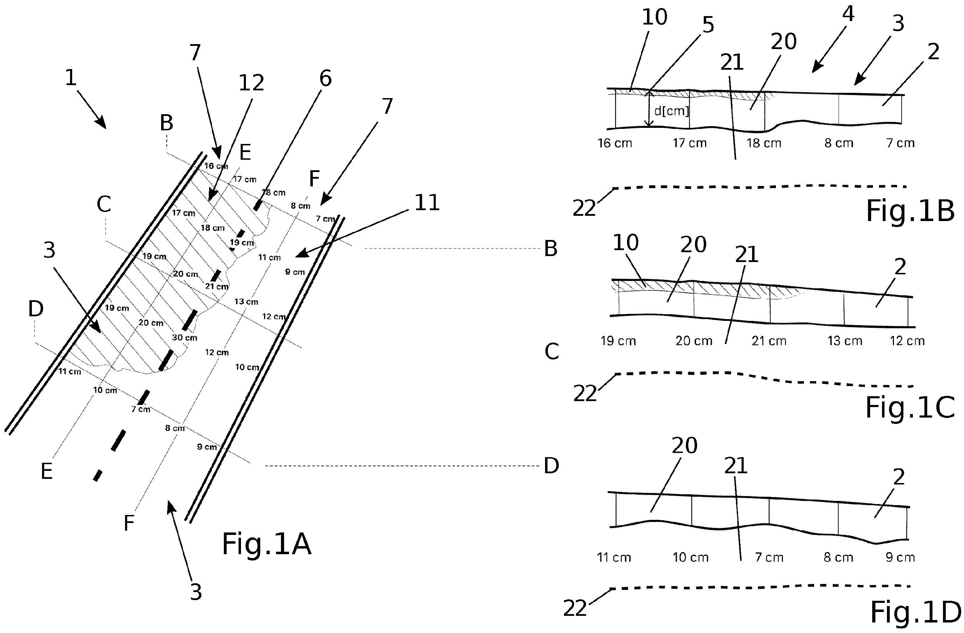

Fig. 1A zeigt schematisch eine perspektivische Ansicht einer Straße 1, in diesem Fall eine Schellstraße. Die Straße 1 weist eine Breite von 12,5 m und eine Länge von 150 m auf. Die Straße 1 weist eine Asphaltdecke 2 (siehe Figuren 1B-D) auf, die auf einer ungebundenen Tragschicht (nicht dargestellt) angeordnet ist. Eine Oberseite 3 der Asphaltdecke 2 bildet eine Oberfläche 4 der Straße 1. Die Oberfläche 3 der schematisch dargestellten Straße ist in diesem Beispiel rechteckig und hat eine Fläche von 1875 m² (= 12,5 m mal 150 m). Das entspricht ungefähr jener Fläche, die maximal zwischen zwei Bohrkernen liegen soll bei einem herkömmlichen Probeverfahren. Die Asphaltdecke 2 weist eine Asphaltdecken-Schichtdicke 5 (siehe Fig. 1B) auf, die ortsabhängig entlang der Straße 1 variiert. Bei einem herkömmlichen Probeverfahren basierend auf der Entnahme von Bohrkernen wäre die Asphaltdecken-Schichtdicke in dem dargestellten Bereich nur an einem Punkt bekannt.

Unter der Asphaltdecke 2 ist in diesem Ausführungsbeispiel eine ungebundene Tragschicht 21 angeordnet. Eine untere Begrenzung 22 der ungebundenen Tragschicht 21 ist mittels einer gestrichelten Linie gekennzeichnet. Die ungebundene Tragschicht 21 befindet sich zwischen der Asphaltdecke 2 und der unteren Begrenzung 22. Die entlang der Straße 1 angeführten Werte betreffen die Asphaltdecken-Schichtdicke 5 an der jeweiligen Position. In diesem Ausführungsbeispiel variiert die Asphaltdecken-Schichtdicke 5 in einem Bereich von minimal 7 cm bis maximal 30 cm. Die Straße 1 weist einen Mittelstreifen 6 auf, der mittig entlang der Straße 1 verläuft und zwei Spuren 7 parallel zur Fahrtrichtung voneinander trennt. Normal zur Mittelstreifen 6 sind drei Schnittlinien B-B, C-C und D-D gekennzeichnet, entlang derer die Querschnitte aus den Figuren 1B, 1C bzw. 1D verlaufen.

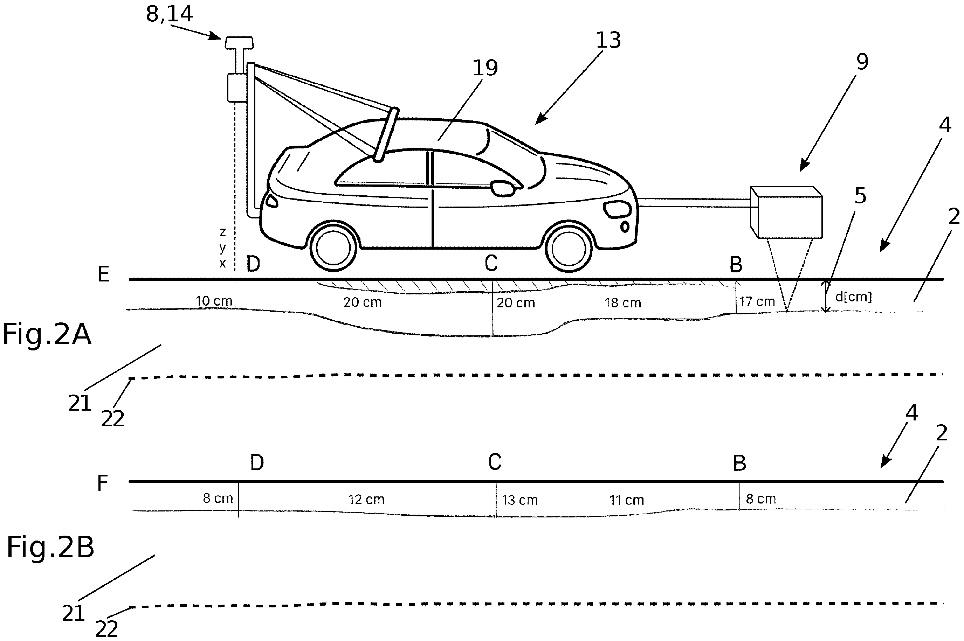

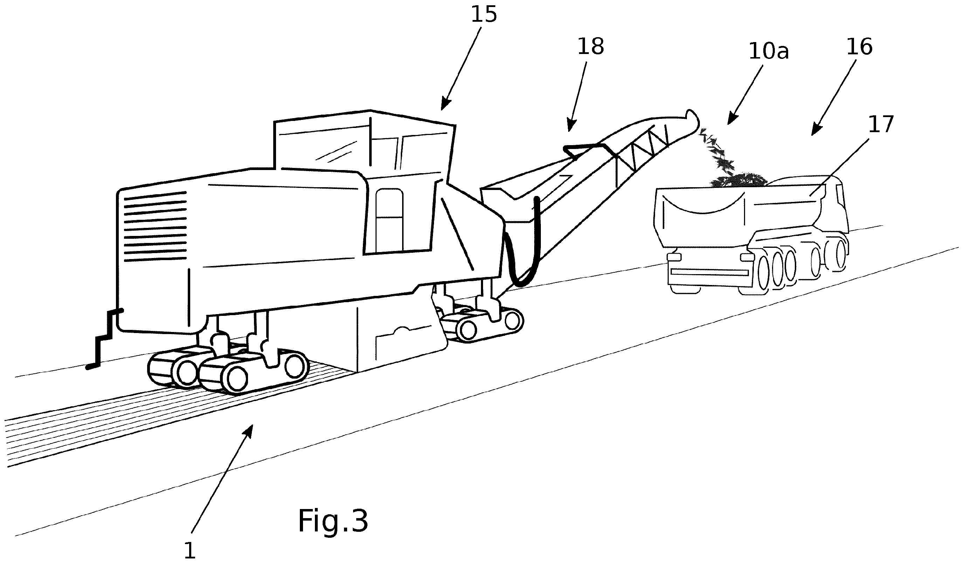

Zur Vorbereitung der Straße 1 zur Sanierung werden die folgenden Schritte durchgeführt:
- Vermessen der Oberfläche 4 der Straße 1 mittels eines optischen Messverfahrens, in diesem Beispiel mittels eines Laser-Scanners 8 (siehe Fig. 2A);
- Ermitteln der Asphaltdecken-Schichtdicke 5 mittels eines Geo-Radars 9 (siehe Fig. 2A);
- Erstellen eines 3D-Modells der Straße 1 aufweisend die zuvor vermessene Oberfläche 4 und die ermittelte Asphaltdecken-Schichtdicke 5;
- Vergleichen der Asphaltdecken-Schichtdicke 5 im 3D-Modell mit einem vordefinierten Maximalwert, um überschüssige Asphaltdecken-Anteile 10 der Asphaltdecke im 3D-Modell zu bestimmen;
- Abfräsen der überschüssigen Asphaltdecken-Anteile 10;
- Abtransportieren der abgefrästen Asphaltdecken-Anteile 10a(siehe Fig. 3); und
- Durchfräsen einer verbleibenden Asphaltdecke 20 (siehe Fig. 1B und 1C).

Der Maximalwert beträgt in diesem Ausführungsbeispiel 14 cm. Dementsprechend weisen Bereiche der Straße 1 mit einer Asphaltdecken-Schichtdicke 5 bis maximal 14 cm keine überschüssigen Asphaltdecken-Anteile 10 auf. Bereiche der Straße mit einer Asphaltdecken-Schichtdicke 5 über 14 cm weisen im Vergleich dazu überschüssige Asphaltdecke-Anteile 10 auf, die schraffiert dargestellt sind. Die Querschnitte B-B und C-C aus Figuren 1B und 1C verlaufen durch den zweiten Bereich 12 der Straße 1 und zeigen überschüssige Asphaltdecken-Anteile. Der Querschnitt D-D aus Fig. 1D hingegen verläuft lediglich durch den ersten Bereich 11 der Straße 1 und zeigt keine überschüssigen Asphaltdecken-Anteile 10. Die (nach dem Abfräsen und Abtransportieren der überschüssigen Asphaltdecken-Anteile 10) verbleibende Asphaltdecke 20 entspricht der Asphaltdecke 2 ohne die überschüssigen Asphaltdecken-Anteile 10, d.h. beispielsweise der Teil der Asphaltdecke 2, der in Figuren 1B bis 1D ohne Schraffur dargestellt ist.

In diesem Ausführungsbeispiel wird vor dem Abfräsen der überschüssigen Asphaltdecken-Anteile 10 der folgende weitere Schritt durchgeführt:
- Bestimmen zumindest eines ersten Bereichs 11 und zumindest eines zweiten Bereichs 12 der Straße 1 im 3D-Modell, wobei der zumindest eine erste Bereich 11 (Bereich ohne Schraffur) im 3D-Modell keine überschüssigen Asphaltdecken-Anteile 10 aufweist, wobei der zumindest eine zweite Bereich 12 (schraffiert dargestellt) überschüssige Asphaltdecken-Anteile 10 aufweist. In diesem exemplarischen Ausführungsbeispiel weist die Straße 1 genau einen ersten Bereich 11 und genau einen zweiten Bereich 12 auf. Alternativ kann die Straße auch mehrere erste Bereiche 11 und/oder zweite Bereiche 12 aufweisen.

Zusätzlich wird der folgende weitere Schritt vor dem Abfräsen der überschüssigen Asphaltdecken-Anteile 10 durchgeführt:
- Erstellen eines Abfräsplans zum Abfräsen der überschüssigen Asphaltdecken-Anteile 10 auf Basis des zumindest einen zweiten Bereichs 12;
wobei das Abfräsen der überschüssigen Asphaltdecken-Anteile 10 entsprechend des erstellten Abfräsplans durchgeführt wird.

Zusätzlich wird ein Volumen der überschüssigen Asphaltdecken-Anteile 10 mittels des 3D-Modells berechnet, um die Planung der Sanierung weiter zu verbessern, indem die Menge an abzutransportierendem Material präzise abgeschätzt wird.

Parallel zum Mittelstreifen 6 sind zwei weitere Schnittlinien E-E und F-F gekennzeichnet, entlang derer die Querschnitte aus den Figuren 2A und 2B verlaufen.

Fig. 2A einen Querschnitt durch die Straße 1 entlang der Schnittlinie E-E (siehe Fig. 1A). Auf der Straße ist schematisch eine Vorrichtung zum Erstellen des 3D-Modells der Straße 1 dargestellt aufweisend:
- ein Messfahrzeug 13 aufweisend
   - eine optischen Messeinrichtung 14, in diesem Beispiel ein Laser-Scanner 8, zum Vermessen der Oberfläche 4 der Straße 1; und
   - ein Geo-Radar 9 zur Ermittlung der Asphaltdecken-Schichtdicke 5 der Straße 10;
- eine Datenverarbeitungsvorrichtung (nicht dargestellt da in diesem Beispiel innerhalb des Messfahrzeugs angeordnet), die dazu eingerichtet ist, ein 3D-Modell der Straße 1 aufweisend die zuvor vermessene Oberfläche 4 und die ermittelte Asphaltdecken-Schichtdicke 5 zu erstellen. Die Datenverarbeitungseinrichtung ist weiters dazu eingerichtet, die Asphaltdecken-Schichtdicke 5 im 3D-Modell mit dem vordefinierten Maximalwert zu vergleichen, um überschüssige Asphaltdecken-Anteile 10 der Asphaltdecke 2 im 3D-Modell zu bestimmen. Das Messfahrzeug 13 weist in dieser beispielhaften Ausführungsform einen PKW 19 auf. Das Geo-Radar 9 ist am PKW 19 befestigt und weist einen im Wesentlichen konstanten Abstand zur Oberfläche 4 der Straße 1 auf, während das Messfahrzeug 13 über die Straße 1 bewegt wird. Weiters ist der Laser-Scanner 8 am PKW 19 befestigt, um die Oberfläche 4 der Straße 1 zu vermessen. Der Laser-Scanner 8 ist in diesem Ausführungsbeispiel ein RD-M1 Scanner der Firma "Topcon Deutschland Positioning GmbH". Das Messfahrzeug 13 zeichnet mittels eines globalen Navigationssatellitensystem (GNSS, in diesem Beispiel GPS), eine Position des Messfahrzeugs 13 während des Vermessens der Oberfläche 4 der Straße 1 auf. Optional kann alternativ oder zusätzlich auch das Geo-Radar 9 mit einer GNSS-Antenne ausgestattet sein, um mittels eines Satellitensystems geortet zu werden. Das Messfahrzeug 13 fährt mit bis zu 80 km/h über die Straße 1, um die Oberfläche 4 der Straße 1 zu vermessen und die Asphaltdecken-Schichtdicke 5 zu ermitteln.

Fig. 3 zeigt eine Asphaltfräse während des Abfräsens von überschüssigen Asphaltdecken-Anteilen 10 von einer Straße 1 in einer perspektivischen Ansicht. Die Asphaltfräse 15 weist eine rotierenden Fräswalze (nicht dargestellt) auf, die mit Fräswerkzeugen (sog. Meißeln) besetzt ist. Die Asphaltfräse 15 ist in diesem Beispiel eine 3D-gesteuerte Asphaltfräse, die auch ohne Fahrer gemäß des Abfräsplans gesteuert werden kann oder autonom arbeitet.

Ein System zur Vorbereitung der Straße 1 zur Sanierung weist die Vorrichtung zum Erstellen eines 3D-Modells der Straße (siehe Fig. 2A) und zusätzlich die Asphaltfräse 15 auf. Die Datenverarbeitungseinrichtung ist dazu eingerichtet zumindest einen ersten Bereich 11 und zumindest einen zweiten Bereich 12 der Straße 1 im 3D-Modell zu bestimmen, wobei der zumindest eine erste Bereich 11 im 3D-Modell keine überschüssigen Asphaltdecken-Anteile 10 aufweist, wobei der zumindest eine zweite Bereich 12 überschüssige Asphaltdecken-Anteile 10 aufweist. Die Datenverarbeitungseinrichtung ist weiters dazu eingerichtet, auf Basis des zumindest einen zweiten Bereichs 12 einen Abfräsplan zum Abfräsen der überschüssigen Asphaltdecken-Anteile 10 zu erstellen, wobei die Asphaltfräse 15 dazu eingerichtet ist, die überschüssigen Asphaltdecken-Anteile 10 entsprechend dem Abfräsplan abzufräsen.

Das System zur Vorbereitung der Straße 1 zur Sanierung weist weiters Mittel zum Abtransportieren 16 der abgefrästen Asphaltdecken-Anteile 10a auf, wobei die Asphaltfräse 15 weiters dazu eingerichtet ist, die verbleibende Asphaltdecke 20 durchzufräsen. Das so aufbereitete Material der (durchgefrästen) verbleibenden Asphaltdecke 20 wird folglich mit einem Bindemittel wie Kalk oder Zement, in diesem Beispiel Zement, vermischt und wiederum als Tragschicht für die sanierte Straße verwendet. Die Mittel zum Abtransportieren 16 der abgefrästen Asphaltdecken-Anteile 10a weisen in diesem Ausführungsbeispiel einen Kipplader 17 auf. In diesem exemplarischen Ausführungsbeispiel ist die Asphaltfräse 15 dazu eingerichtet, die abgefrästen Asphaltdecken-Anteile 10a direkt in den Kipplader zu befördern. Dazu weist die Asphaltfräse 15 eine Fördereinrichtung 18 auf. Alternativ dazu kann die Asphaltfräse 15 dazu eingerichtet sein, abgefräste oder durchgefräste Asphaltdecken-Anteile 10a direkt auf der verbleibenden Straße abzuladen.

Fig. 2B zeigt (ähnlich wie Fig. 2A) eine Schnittansicht der Straße aus Fig. 1 entlang einer Schnittlinie F-F.

## Patentansprüche

1. Verfahren zur Vorbereitung einer Straße (1) zur Sanierung mit den folgenden Schritten:
- Vermessen einer Oberfläche (4) der Straße (1) mittels eines optischen Messverfahrens, insbesondere mittels eines Laser-Scanners (8);
- Ermitteln einer Asphaltdecken-Schichtdicke (5) mittels eines Geo-Radars (9);
- Erstellen eines 3D-Modells der Straße (1) aufweisend die zuvor vermessene Oberfläche (4) und die ermittelte Asphaltdecken-Schichtdicke (5);
- Vergleichen der Asphaltdecken-Schichtdicke (5) im 3D-Modell mit einem vordefinierten Maximalwert, um überschüssige Asphaltdecken-Anteile (10) der Asphaltdecke (2) im 3D-Modell zu bestimmen;
- Abfräsen der überschüssigen Asphaltdecken-Anteile (10);
- Abtransportieren der abgefrästen Asphaltdecken-Anteile (10a); und
- Durchfräsen einer verbleibenden Asphaltdecke (20).

2. Verfahren nach Anspruch 1, **gekennzeichnet durch** den weiteren Schritt vor dem Abfräsen der überschüssigen Asphaltdecken-Anteile (10):
- Bestimmen zumindest eines ersten Bereichs (11) und zumindest eines zweiten Bereichs (12) der Straße (1) im 3D-Modell, wobei der zumindest eine erste Bereich (11) im 3D-Modell keine überschüssigen Asphaltdecken-Anteile (10) aufweist, wobei der zumindest eine zweite Bereich (12) überschüssige Asphaltdecken-Anteile aufweist.

3. Verfahren nach Anspruch 2, **gekennzeichnet durch** den weiteren Schritt vor dem Abfräsen der überschüssigen Asphaltdecken-Anteile (10):
- Erstellen eines Abfräsplans zum Abfräsen der überschüssigen Asphaltdecken-Anteile (10) auf Basis des zumindest einen zweiten Bereichs (12);
wobei das Abfräsen der überschüssigen Asphaltdecken-Anteile (10) entsprechend des erstellten Abfräsplans durchgeführt wird.

4. Verfahren nach einem der Ansprüche 1 bis 3, **gekennzeichnet durch** den weiteren Schritt:
- Berechnen eines Volumens der überschüssigen Asphaltdecken-Anteile (10) mittels des 3D-Modells.

5. Verfahren nach einem der Ansprüche 1 bis 4, **gekennzeichnet durch** den weiteren Schritt:
- Entnehmen zumindest eines Bohrkerns aus der Straße (1) zur Ermittlung zumindest eines Referenzpunktes der Asphaltdecken-Schichtdicke (5); wobei das 3D-Modell den zumindest einen Referenzpunkt aufweist.

6. Vorrichtung zum Erstellen eines 3D-Modells einer Straße (1) aufweisend:
- ein Messfahrzeug (13) aufweisend
- eine optischen Messeinrichtung (14), insbesondere einen Laser-Scanner (8), zum Vermessen einer Oberfläche (4) der Straße (1); und
- ein Geo-Radar (9) zur Ermittlung einer Asphaltdecken-Schichtdicke (5) der Straße (1);
- eine Datenverarbeitungsvorrichtung, die dazu eingerichtet ist, ein 3D-Modell der Straße (1) aufweisend die zuvor vermessene Oberfläche (4) und die ermittelte Asphaltdecken-Schichtdicke (5) zu erstellen, wobei die Datenverarbeitungseinrichtung weiters dazu eingerichtet ist, die Asphaltdecken-Schichtdicke (5) im 3D-Modell mit einem vordefinierten Maximalwert zu vergleichen, um überschüssige Asphaltdecken-Anteile (10) der Asphaltdecke (2) im 3D-Modell zu bestimmen.

7. System zur Vorbereitung einer Straße (1) zur Sanierung aufweisend die Vorrichtung zum Erstellen eines 3D-Modells der Straße (1) nach Anspruch 6, mit einer Asphaltfräse, wobei die Datenverarbeitungseinrichtung dazu eingerichtet ist zumindest einen ersten Bereich (11) und zumindest einen zweiten Bereich (12) der Straße (1) im 3D-Modell zu bestimmen, wobei der zumindest eine erste Bereich (11) im 3D-Modell keine überschüssigen Asphaltdecken-Anteile (10) aufweist, wobei der zumindest eine zweite Bereich (12) überschüssige Asphaltdecken-Anteile (10) aufweist, wobei die Datenverarbeitungseinrichtung weiters dazu eingerichtet ist, auf Basis des zumindest einen zweiten Bereichs (12) einen Abfräsplan zum Abfräsen der überschüssigen Asphaltdecken-Anteile (10) zu erstellen, wobei die Asphaltfräse (15) dazu eingerichtet ist, die überschüssigen Asphaltdecken-Anteile (10) entsprechend dem Abfräsplan abzufräsen.

8. System zur Vorbereitung einer Straße (1) zur Sanierung nach Anspruch 7, mit Mitteln zum Abtransportieren (16) der abgefrästen Asphaltdecken-Anteile (10a), wobei die Asphaltfräse (15) weiters dazu eingerichtet ist, eine verbleibende Asphaltdecke (20) durchzufräsen.
